(19) Europäisches Patentamt
European Patent Office
Office européen des brevets

(11)  **EP 1 606 104 B1**

(12)  **EUROPEAN PATENT SPECIFICATION**

(45) Date of publication and mention
of the grant of the patent:
**20.08.2008  Bulletin 2008/34**

(51) Int Cl.:
**B32B 5/26** *(2006.01)*   **D04H 13/00** *(2006.01)*

(21) Application number: **04757972.7**

(86) International application number:
**PCT/US2004/008642**

(22) Date of filing: **19.03.2004**

(87) International publication number:
**WO 2004/085142 (07.10.2004 Gazette 2004/41)**

(54) **MULTI-LAYER ADHESIVE-BONDED NONWOVEN SHEET AND PROCESS THEREFOR**

MIT KLEBSTOFF GEBUNDENER MEHRSCHICHTVLIESSTOFF UND VERFAHREN ZU DESSEN HERSTELLUNG

FEUILLE DE NON-TISSE MULTICOUCHE LIEE PAR ADHESIF ET PROCEDE ASSOCIE

(84) Designated Contracting States:
**DE FR GB**

(30) Priority: **21.03.2003  US 456483 P**

(43) Date of publication of application:
**21.12.2005  Bulletin 2005/51**

(73) Proprietor: **E.I. DU PONT DE NEMOURS AND COMPANY**
**Wilmington DE 19898 (US)**

(72) Inventor: **STURGILL, Gary, Lee**
**Nashville, TN 37215 (US)**

(74) Representative: **Thomson, James B.**
**Frank B. Dehn & Co.**
**St Bride's House**
**10 Salisbury Square**
**London**
**EC4Y 8JD (GB)**

(56) References cited:
**US-A- 4 588 457**        **US-A- 5 726 103**

**Description**

BACKGROUND OF THE INVENTION

Adhesive-bonded multi-layer nonwoven sheet structures are known in the art for a variety of end uses including medical garments. For example, Crenshaw et al. U.S. Patent No. 4,588,457 describes a two-ply nonwoven fabric which comprises a first nonwoven material, for example a spunbond nonwoven, bonded to a second nonwoven material such as a tissue layer using a flexible latex binder material. The latex binder is dried and cured using heated rolls.

Medical garments such as surgical gowns with multi-layer zones are conventionally formed by gluing reinforcing layers on areas of the gown where contact with fluids is most likely to occur, such as the front of the gown and the lower portion of the gown sleeves. The multi-layer zones provide added protection to ensure that liquid-borne contaminates do not pass through the garment fabric while maintaining a high degree of breathability overall for enhanced comfort.

Nonwoven materials used for the manufacture of zoned medical garments include polypropylene spunbond-meltblown-spunbond (SMS) nonwoven fabrics and hydroentangled fabrics such as Sontara® spunlaced polyester/wood pulp nonwoven fabrics (manufactured by E.I. du Pont de Nemours and Company, Wilmington, DE). For example, in the manufacture of a medical garment, reinforcing layers can be glued in specified locations onto a pattern piece of cut fabric to form a pattern piece having reinforced zones that will be used in the construction of the final garment. Identical reinforced fabric pieces are generally stacked in a pile, followed by transferring the pile of reinforced fabric pieces to another station for further processing, such as joining two or more different or same pattern pieces to form the final garment. If the reinforcing layers are not securely bonded to the base layer, the layers can shift with respect to each other while they are stacked in the pile. This results in the reinforcing layer being misaligned with the desired location on the base fabric and in the final garment and also leaves an outline of adhesive where the reinforcing layer was originally placed.

When a layer of spunlaced fabric is bonded to a second layer of spunlaced fabric using a water-based adhesive to form a multi-layer nonwoven sheet structure such as in the manufacture of zoned surgical gowns, the bond strength between the layers increases rapidly so that the multi-layer nonwoven sheet can be further processed without the bonded layers shifting with respect to each other. On the other hand, it has been found that when polypropylene SMS materials are used in the manufacture of zoned medical garments wherein the reinforced zones are formed by bonding a piece of polypropylene SMS fabric to the base polypropylene SMS fabric using a water-based adhesive, the bond strength between the layers in the multi-layer polypropylene nonwoven sheet builds more gradually, requiring longer drying times or use of heat to accelerate drying.

There remains a need in the art for fabrics suitable for the fabrication of medical garments that rapidly build high bond strength after bonding to another layer with a water-based adhesive composition without a heated drying step, thus reducing fabrication time and cost.

SUMMARY OF THE INVENTION

In a first embodiment, the invention is directed to a multi-layer nonwoven sheet comprising (a) a first layer comprising a spunbondmeltblown-spunbond nonwoven fabric having an inner surface and an outer surface, wherein the meltblown layer comprises meltblown fibers, the surface of the meltblown fibers comprising a polymer having a surface tension of at least 25 miliNewtons/m (dynes/cm) and (b) a second layer having an inner surface and an outer surface, selected from the group consisting of nonwoven fabrics, knitted fabrics, woven fabrics, and films; adhered with (c) a polymeric adhesive which adheres at least a portion of the inner surfaces of the first layer and the second layer together, wherein the polymeric adhesive is derived from a water-based adhesive composition.

Another embodiment of the invention is directed to a medical garment comprising a base sheet material and at least one multi-layer zone, the multi-layer zone comprising a multi-layer monomer sheet according to the first embodiment adhered to the base sheet by a polymeric adhesive derived from a water-based adhesive composition,

Another embodiment of the invention is directed to a method for forming a multi-layer adhesive-bonded nonwoven sheet comprising the steps of: (a) providing a first layer comprising a spunbond-meltblown-spunbond nonwoven fabric having an inner surface and an outer surface, wherein the meltblown layer comprises meltblown fibers, the surface of the meltblown fibers comprising a polymer having a surface tension of at least 25 milliNewtons/m (dynes/cm) (b) providing a second layer having an inner surface and an outer surface, selected from the group consisting of nonwoven fabrics, knitted fabrics, woven fabrics, and films; (c) applying a water-based adhesive composition to at least a portion of one of the inner surface of the first layer or the inner surface of the second layer; and (d) contacting the inner surface side of the first layer and the inner surface side of the second layer to adhere the surfaces together.

**BRIEF DESCRIPTION OF THE DRAWINGS**

Figure 1 is a schematic diagram illustrating fabric assembly for shear strength measurements.

figure 2 is a plot of %Ultimate Strength versus drying time for the adhesive-bonded multi-layer sheets prepared in Example 1 and Comparative Example A.

Figure 3 is a plot of %Ultimate Strength versus drying time for the adhesive-bonded multi-layer sheets prepared in Example 2 and Comparative Example B.

Figure 4 is a plot of %Ultimate Strength versus drying time for the adhesive-bonded multi-layer sheets prepared in Example 3 and Comparative Example C.

Figure 5 is a plot of %Ultimate Strength versus drying time for the adhesive-bonded multi-layer sheets prepared in Example 4 and Comparative Example D.

Figure 6 is a plot of %Ultimate Strength versus drying time for adhesively-bonded multi-layer sheets prepared in Example 1 and Comparative Example E.

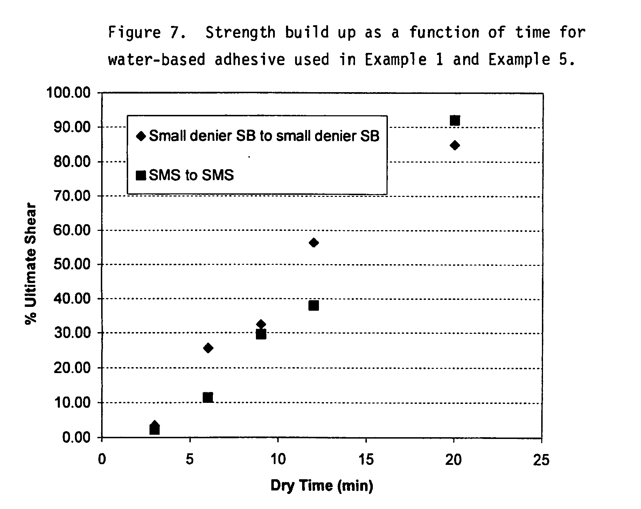

Figure 7 is a plot of %Ultimate Strength versus drying time for adhesively-bonded multi-layer sheets prepared in Example 1 and Example 5.

**DETAILED DESCRIPTION OF THE INVENTION**

When a layer of spunbonded or SMS fabric is bonded to a second layer of spunbonded, SUMS fabric, or other sheet-like layer to form a multi-layer nonwoven sheet structure such as in the manufacture of zoned surgical gowns, it would be advantageous if the bond Strength between the layers increased rapidly so that the multi-layer nonwoven sheet can be further processed without the bonded layers shifting with respect to each other.

The present invention is directed to a multi-layer nonwoven sheet comprising at least first and second sheet layers, wherein the first layer comprises a sms a nonwoven fabric that comprises spunbond fibers on at least one surface thereof. The first and second layers are bonded together by a polymeric adhesive that is derived from a water-based adhesive composition, with the spunbond fiber layer contacting the adhesive composition. The multi-layer adhesive-bonded sheet structures of the present invention develop a higher bond strength after short drying times under ambient conditions than certain other adhesive-bonded multi-layer sheet structures known in the art.

According to this invention, multi-layer nonwoven sheet structures are prepared by bonding a sms nonwoven fabric comprising spunbond fibers on at least one surface thereof to a second layer using a water-based adhesive. The surface of the spunbond fibers comprises a polymer having a surface tension of at least about 25 milliNewtons/m (dynes/cm). The spunbond fabric can be treated with a fluorochemical composition prior to forming the multi-layer nonwoven sheet. The nonwoven layer is a spunbond-meltblown-spunbond composite nonwoven fabric wherein the surface of the meltblown fibers comprises a polymer having a surface tension of at least about 25 milliNewtons/m (dynes/cm).

The term "polyolefin" as used herein, is intended to mean homopolymers, copolymers, and blends of polymers prepared from at least 50 weight percent of an unsaturated hydrocarbon monomer. Examples of polyolefins include polyethylene, polypropylene, poly(4-methylpentene-1), polystyrene, and copolymers thereof.

The term "polyethylene" (PE) as used herein is intended to encompass not only homopolymers of ethylene, but also copolymers wherein at least 85% of the recurring units are ethylene units.

The term "polypropylene" (PP) as used herein is intended to embrace not only homopolymers of propylene but also copolymers where at least 85% of the recurring units are propylene units.

The term "linear low density polyethylene" (LLDPE) as used herein refers to linear ethylene/$\alpha$-olefin co-polymers having a density of less than about 0.955 g/cm$^3$, preferably in the range of 0.91 g/cm$^3$ to 0.95 g/cm$^3$, and more preferably in the range of 0.92 g/cm$^3$ to 0.95 g/cm$^3$. Linear low density polyethylenes are prepared by co-polymerizing ethylene with minor amounts of an alpha, beta-ethylenically unsaturated alkene co-monomer ($\alpha$-olefin), the $\alpha$-olefin co-monomer having from 3 to 12 carbons per $\alpha$-olefin molecule, and preferably from 4 to 8 carbons per $\alpha$-olefin molecule. Alpha-olefins which can be co-polymerized with ethylene to produce LLDPE's include propylene, 1-butene, 1-pentene, 1-hexene, 1-octene, 1-decene, or a mixture thereof. Preferably, the $\alpha$-olefin is 1-hexene or 1-octene.

The term "high density polyethylene" (HDPE) as used herein refers to polyethylene homopolymer having a density of at least about 0.94 g/cm$^3$, and preferably in the range of about 0.94 g/cm$^3$ to about 0.965 g/cm$^3$.

The term "polyester" as used herein is intended to embrace polymers wherein at least 85% of the recurring units are condensation products of dicarboxylic acids and dihydroxy alcohols with linkages created by formation of ester units. This includes aromatic, aliphatic, saturated, and unsaturated di-acids and di-alcohols. The term "polyester" as used herein also includes copolymers (such as block, graft, random and alternating copolymers), blends, and modifications thereof. Examples of polyesters include poly(ethylene terephthalate) (PET) which is a condensation product of ethylene glycol and terephthalic acid and poly(1,3-propylene terephthalate) which is a condensation product of 1,3-propanediol and terephthalic acid.

The term "nonwoven fabric, sheet, layer or web" as used herein means a structure of individual fibers, filaments, or threads that are positioned in a random manner to form a planar material without an identifiable pattern, as opposed to a knitted or woven fabric. Examples of nonwoven fabrics include meltblown webs, spunbond webs, carded webs, air-laid webs, and wet-laid webs and composite webs comprising one or more nonwoven layers.

The term "multi-layer nonwoven sheet" as used herein refers to a multi-layer structure comprising at least first and second sheet layers wherein at least the first layer is a nonwoven fabric. The second layer can be a nonwoven fabric (same as or different than the first layer), woven fabric, knitted fabric, or a film. The term "multi-layer adhesive-bonded nonwoven sheet" refers to multi-layer nonwoven sheet in which the first layer is bonded to the second layer by a layer of polymeric adhesive that is derived from a water-based adhesive composition. The multi-layer adhesive-bonded nonwoven sheet may comprise a portion of an article, for example when multi-layer adhesive-bonded zones are formed on portions of an article. Alternately, an article can be fabricated entirely from the multi-layer adhesive-bonded nonwoven sheet.

The term "meltblown fibers" as used herein, means fibers which are formed by meltblowing, which comprises extruding a meltprocessable polymer through a plurality of capillaries as molten streams into a high velocity gas (e.g. air) stream. The high velocity gas stream attenuates the streams of molten thermoplastic polymer material to reduce their diameter and form meltblown fibers having a diameter between about 0.5 and 10 micrometers. Meltblown fibers are generally discontinuous fibers but can also be continuous. Meltblown fibers carried by the high velocity gas stream are generally deposited on a collecting surface to form a meltblown web of randomly dispersed fibers.

The term "spunbond" fibers as used herein means fibers which are formed by extruding molten thermoplastic polymer material as fibers from a plurality of fine, usually circular, capillaries of a spinneret with the diameter of the extruded fibers then being rapidly reduced by drawing and then quenching the fibers. Other fiber cross-sectional shapes such as oval, multi-lobal, etc. can also be used. Spunbond fibers are generally continuous and have an average diameter of greater than about 5 micrometers. Spunbond nonwoven fabrics or webs are formed by laying spunbond fibers randomly on a collecting surface such as a foraminous screen or belt. Spunbond webs are generally bonded by methods known in the art such as by hot-roll calendering or by passing the web through a saturated-steam chamber at an elevated pressure. For example, the web can be thermally point bonded at a plurality of thermal bond points located across the spunbond fabric.

The term "spunlaced fabric" as used herein refers to a nonwoven fabric that is produced by entangling fibers in the web to provide a strong fabric that is free of binders. For example, a spunlaced fabric can be prepared by supporting a nonwoven web of fibers on a porous support such as a mesh screen and passing the supported web underneath water jets, such as in a hydraulic needling process. The fibers can be entangled in a repeating pattern.

The term "spunbond-meltblown-spunbond nonwoven fabric" (SMS) as used herein refers to a composite nonwoven fabric comprising a web of meltblown fibers sandwiched between and bonded to two spunbond layers. A SMS nonwoven fabric can be formed in-line by sequentially depositing a first layer of spunbond fibers, a layer of meltblown fibers, and a second layer of spunbond fibers on a moving porous collecting surface. The assembled layers can be bonded by passing through a nip formed between two rolls which can be heated or unheated and smooth or patterned. Alternately, the individual spunbond and meltblown layers can be pre-formed and optionally bonded and collected individually such as winding the fabrics on wind-up rolls. The individual layers can be assembled by layering at a later time and bonded together to form a SMS nonwoven fabric. Additional spunbond and/or meltblown layers can be incorporated in the SMS fabric, for example spunbond-meltblown-meltblown-spunbond, etc. Alternately, a single layer of spunbond and a single layer of meltblown fabric can be used to form a spunbond-meltblown fabric.

The term "multiple component fiber" as used herein refers to any fiber that is composed of at least two distinct polymeric components which have been spun together to form a single fiber. The at least two polymeric components are preferably arranged in distinct substantially constantly positioned zones across the cross-section of the multiple component fibers and extend substantially continuously along the length of the fibers. Preferably the multiple component fibers are bicomponent fibers which are made from two distinct polymers. Bicomponent fibers are known in the art and include sheath core fibers in which one of the polymeric components forms a core that is surrounded by the second polymeric component which forms a sheath on the outer peripheral surface of the fiber, and side-by-side cross-sections in which the first polymeric component forms a segment that is adjacent a segment formed by the second polymeric component, each segment being substantially continuous along the length of the fiber with both polymers exposed on the fiber surface. Multiple component fibers are distinguished from fibers that are extruded from a single homogeneous or heterogeneous blend of polymeric materials. However, one or more of the distinct polymeric components used to form the multiple component fibers can comprise a blend of polymeric materials.

The term "water-based adhesive composition" as used herein refers to adhesive compositions comprising an adhesive material dispersed or dissolved in a solvent, wherein the solvent is substantially all water. For example, the water-based adhesive composition can be an emulsion. The adhesive material can be either a natural or synthetic material. The water-based adhesive composition is formulated to contain materials which generally cure at room temperature, e.g. from about 15°C to about 30°C, upon drying, without the necessity of an additional heating step.

The multi-layer adhesive-bonded nonwoven sheets of the present invention are prepared by bonding a first layer comprising a sms nonwoven fabric on at least one of its sides to a second sheet layer using a water-based adhesive. The side of the first layer that is bonded to the second layer comprises spunbond fibers. The first and second layers preferably have a basis weight between about 10 and 100 g/m2. When the first layer is a spunbond nonwoven, at least a portion of the peripheral surface of the spunbond fibers comprises a synthetic polymer having a surface tension of at least about 25 milliNewtons/cm (dynes/cm) (measured at 20°C) on at least a portion thereof. More preferably, at least a portion of the peripheral surface of the spunbond fibers comprises a synthetic polymer having a surface tension of at least about 30 milliNewtons/cm (dynes/cm). The spunbond fibers preferably have a diameter that is no greater than 22 micrometers, preferably no greater than 19 micrometers. The spunbond fibers can be single component or multiple component fibers. Examples of suitable spunbond fabrics include sheath/core spunbond fabrics wherein the sheath comprises a polyester copolymer such as a poly(ethylene terephthalate) copolymer and the core comprises a polyester such as poly(ethylene terephthalate).

Examples of polymers having a surface tension of at least about 25 dynes/cm include polyolefins such as polyethylene, polyesters such as poly(ethylene terephthalate) or poly(1,3-propylene terephthalate), polyamides such as poly(hexamethylene adipamide) (nylon 66) or poly(caproamide) (nylon 6), and polystyrene, and blends and copolymers thereof. For example, polyethylene has a surface tension of about 31 milliNewtons/m (dynes/cm) and poly(ethylene terephthalate) homopolymer has a surface tension of about 43 milliNewtons/m (dynes/cm). Polypropylene has a surface tension of about 20 milliNewtons/m (dynes/cm) and therefore is not suitable as the polymeric component having a surface tension of at least about 25 milliNewtons/m (dynes/cm) Suitable polyethylenes include linear low density polyethylene, high density polyethylene, and blends thereof. In one embodiment, the peripheral surface of the spunbond fibers consists essentially of one or more polymers having a surface tension of at least about 25 milliNewtons/m (dynes/cm). For example, the spunbond fibers can consist essentially of one or more polyethylenes. Alternately the spunbond fibers can comprise a blend of polyethylene and another polymer having a surface tension of less than about 25 milliNewtons/m (dynes/cm). For polymer blends, the polymer blend preferably has a weighted average surface tension (based on volume) of at least about 25 milliNewtons/m (dynes/cm). For example, a polymer blend comprising 75 volume percent polyethylene having a surface tension of 3milliNewtons/m (dynes/cm) and 25 volume percent polypropylene having a surface tension of 20 dynes/cm would have a weighted average surface tension of 0.75(43) + 0.25(20) = 37.25 milliNewtons/m (dynes/cm). Alternately, the spunbond fibers can be multiple component spunbond fibers wherein at least a portion of the peripheral surface of the spunbond fibers comprises a polymer having a surface tension of at least about 25 milliNewtons/m (dynes/cm). One or more of the polymeric components in the multiple component spunbond fibers can comprise a blend of a first polymer having a surface tension of at least about 25 milliNewtons/m (dynes/cm) and a second polymer. In one embodiment, the spunbond fibers comprise bicomponent fibers wherein the two polymeric components are arranged in a sheath/core cross-section wherein the sheath comprises a polymer having a surface tension of at least about 25 milliNewtons/m (dynes/cm) The sheath can consist essentially of one or more polymers having a surface tension of at least about 25 milliNewtons/m (dynes/cm). Examples of suitable core polymers include polyesters, polyamides, and polypropylene. For example, the spunbond fibers can comprise bicomponent sheath/core fibers wherein the sheath comprises polyethylene and the core comprises polyester.

The first layer can comprise a spunbond-meltblown-spunbond nonwoven fabric wherein the meltblown layer of the SMS nonwoven fabric comprises meltblown fibers comprising a polymer having a surface tension of at least about 25 milliNewtons/m (dynes/cm) preferably at least about 40 miliNewtons/m (dynes/cm) on at a portion of the peripheral surface of the meltblown fibers. The meltblown fibers can comprise bicomponent fibers wherein the polymeric components are arranged in a side-by-side configuration and at least one of the polymeric components in the meltblown fibers has a surface tension of at least about 40 milliNewtons/m (dynes/cm) include polymers having a surface tension of at least about 40 milliNewtons/m (dynes/cm) include polyesters such as poly(ethylene terephthalate), poly(1,3-propylene terephthalate), poly(1,4-butylene terephthalate), and polyester co-polymers such as poly(ethylene terephthalate) modified with isophthalic acid or 1,4-cyclohexanedimethanol.

In one embodiment using a SMS nonwoven fabric comprising the above-described meltblown layer, at least one of the spunbond layers in the SMS nonwoven fabric can comprise spunbond fiber which comprise a polymer having a surface tension of at least about 25 milliNewtons/m (dynes/cm) preferebly at least about 30 milliNewtons/m (dynes/cm) on at a portion of the peripheral surface thereof. The spunbond layer can comprise bicomponent fibers wherein the polymeric components are arranged in a sheath/core cross-section wherein the sheath comprises a polymer having a surface tension of at least about 25 (milliNewtons/m (dynes/cm). The sheath can consist essentially one or more polymers having a surface tension of at least about 25 milliNewtons/m (dynes/cm).

The first layer can further comprise a fluorochemical, which can be applied topically to the first layer or incorporated as a melt additive in the spunbond fibers of the first layer during spinning. The first layer is a SMS fabric, and a fluorochemical melt additive can also be incorporated in the meltblown fibers. Fluorochemical melt-additives are known in the art to migrate to the surface of the fibers, for example upon heating of the fibers. When a topical fluorochemical is used, the first layer is topically treated with a fluorochemical finish prior to bonding to the second sheet layer. Fluorochemical finishes are known in the art and are commonly aqueous emulsions of fluoropolymers. Fluorochemical finishes are generally applied topically to nonwoven fabrics used in surgical gowns to enhance the ability of the fabric to repel liquids, including those having lower surface tension than water that are commonly found in the operating theater such as saline, blood, alcohol, and oil. Suitable fluoropolymers include fluorinated acrylic copolymers such as Zonyl® fluoropolymers available from E.I. du Pont de Nemours and Company (Wilmington, DE). The fluorochemical finish is preferably applied to the first layer at sufficient levels to yield a first layer having an alcohol repellency rating of at least about 6.

When the first layer is a SMS nonwoven fabric wherein the spunbond fibers comprise sheath/core polyethylene/poly(ethylene terephthalate) fibers and the meltblown fibers are bicomponent fibers comprising between about 20 and 92 weight percent of a polyolefin component such as linear low density polyethylene and between about 80 and 8 weight percent of a polyester component such as poly(ethylene terephthalate) arranged in a side-by-side configuration, fluorochemical levels of between about 0.132 weight % and 0.33 weight%, more preferably between about 0.25 weight % and 0.33 weight % have been found to yield acceptable alcohol repellency and water impact rating. This is lower than the amount of fluorochemical required to achieve acceptable alcohol repellency and water impact rating with 100% polyester SMS nonwoven fabric. The second layer can also comprise a fluorochemical. Untreated polypropylene and polyethylene nonwoven fabrics generally have an alcohol repellency rating of between 2-4. The fluorochemical finishes can be applied to the nonwoven fabric or other layers using methods known in the art such as spray or foam application, kiss-roll application, or a dip-squeeze process in which the fabric is immersed in the finish solution followed by squeezing out the excess finish, such as by passing the impregnated fabric through a nip formed between two rolls.

The second layer forming the multi-layer composite nonwoven sheets of the current invention can be the same as or different from the first layer. The second layer can be a film, nonwoven fabric, woven fabric, or knit fabric. If the second layer is a film, the water-based adhesive composition is preferably applied to the first layer which is then contacted with the film layer. In one embodiment, the second layer is a nonwoven web that can be substantially the same as or different from the first layer. In one embodiment, both the first and second layers are SMS nonwoven fabrics. In one such embodiment, the spunbond sides bonded together by the adhesive material comprise spundbond fibers comprising a polymer having a surface tension of at least about 25 milliNewtons/m (dynes/cm) on at least a portion of the peripheral surface thereof and the meltblown fibers comprise bicomponent fibers in which the polymeric components are arranged in a side-by-side configuration and at least one of the polymeric components in the meltblown fibers has a surface tension of at least about 40 milliNewtons (dynes/cm). A SMS fabric that has been found to provide drying times comparable to polyester/wood pulp spunlaced fabrics when two layers are bonded using a water based adhesive comprises bicomponent polyester/polyethylene core/sheath spunbond fiber webs and a web of bicomponent side-by-side polyester/polyethylene meltblown fibers.

Suitable water-based adhesive compositions are those that contain materials which generally cure at room temperature, e.g. from about 15°C to about 30°C, upon drying, without the necessity of an additional heating step, and include aqueous dispersions or emulsions of poly(vinyl acetate) copolymers, for example copolymers of ethylene and vinyl acetate. Such adhesives are available commercially from a number of sources. The adhesive material can be non-cross-linkable or cross-linkable. The water-based adhesives preferably comprise between 40-80 weight percent solids with the remainder of the adhesive composition comprising primarily water. More preferably, the water-based adhesive compositions comprise between 50-75 weight percent solids, and most preferably between about 60-75 weight percent solids. Other additives such as tackifiers, anti-oxidants/preservatives, and viscosity modifiers can also be included in the water-based adhesive composition.

The multi-layer adhesive-bonded nonwoven sheets of the current invention can be prepared using methods known in the art. For example, the water-based adhesive composition can be applied to the spunbond side of the first layer which comprises a polymer having a surface tension of at least about 25 milliNewtons/m (dynes/cm) or to a side of the second layer, or both, and the layers contacted such that the adhesive layer is sandwiched between the layers with the adhesive contacting the spunbond side of the first layer which comprises a polymer having a surface tension of at least about 25 milliNewtons/m (dynes/cm). Suitable methods for applying the water-based adhesive composition to the layer(s) include hand-application using a squeeze bottle or tube or roller-tipped bottle, spraying, or printing the adhesive on the layer(s) using an applicator roll (e.g. kiss roll). For example, an engraved roll can be used if it is desired to apply a discontinuous pattern of adhesive. The water-based adhesive composition can be applied on the surface adjacent the perimeter of one or both of the layers. Similarly, the adhesive can be applied as a pattern of adhesive over the entire surface of one or both of the layers, for example as a series of lines or other discontinuous pattern. Alternately, the adhesive can be applied as a continuous layer to one or both of the layers. For end uses where breathability is desired such as medical gowns, the water-based adhesive composition is preferably applied in a discontinuous manner, leaving breathable adhesive-free regions between the adhesive-coated regions. It is preferred to use as little of the water-based adhesive composition as necessary from an economic perspective and to reduce the drying time required for the bond strength of the layers to build to a value that allows further handling and processing of the multi-layer adhesive-bonded nonwoven sheets without the layers shifting with respect to each other. If insufficient adhesive is used, there will be insufficient bonding between the layers. If too much adhesive is used, the drying time can increase and/or the water-based adhesive composition can soak through one or more of the sheet layers. If the adhesive composition soaks through one or more of the surface layers, it can cause problems such as when reinforced pattern pieces comprising wet adhesive are stacked with other reinforced pieces, causing adjacent reinforced pattern pieces to stick together. If the adhesive composition soaks through one or more of the sheet layers, it can also cause visual defects in the multi-layer adhesive-bonded nonwoven sheet.

After contacting the layers to adhere them together, pressure can be applied to improve the bonding between the layers and the water-based adhesive composition is allowed to dry. Since water-based adhesives generally cure at room temperature upon drying, no additional heating step is required in preparing the multi-layer adhesive-bonded nonwoven sheets of the current invention since, even at relatively high percentages of water in the adhesive composition, the bonded layers develop significant wet bond strength after a short time compared to other materials in the art such as adhesive-bonded polypropylene SMS materials. Typical drying times at ambient temperature (generally between about 15°C to about 30°C) for the multi-layer adhesive-bonded nonwoven sheets of the current invention to achieve sufficient bond strength to be handled in further processing range from about 5 to 7 minutes, depending on the water-based adhesive composition that is used. This is about 2 to 3 times faster than polypropylene SMS materials, which generally require a drying time of at least 15 minutes under ambient conditions.

The multi-layer adhesive-bonded nonwoven sheets can be used in the fabrication of adhesive-bonded articles such as medical garments wherein the garment is assembled from pieces cut entirely from the multi-layer adhesive-bonded sheet. For example, the multi-layer adhesive-bonded nonwoven sheet can be prepared by bonding a nonwoven layer to a second layer with the layers substantially completely overlapping and the adhesive-bonded multi-layer nonwoven sheet allowed to dry and rolled up. The roll goods can then be fabricated into medical gowns or other articles in a later processing step.

Alternately, zoned medical garments can be fabricated wherein selected areas (zones) on a base sheet comprise the multi-layer adhesive-bonded nonwoven sheets of the present invention. In one embodiment, roll good film or fabric used as the second layer can be cut into various pattern pieces that will eventually be joined (for example by ultrasonic or thermal bonding or sewing) to form a garment. For example pattern pieces can be cut such as pieces that will form the sleeve portion of the gown, chest panels that will form the front of the gown, and back panel that will form the back of the gown, etc. The first layer (selected from the nonwoven fabrics described above) is cut into the desired shapes/sizes and bonded to one or more of the pattern pieces cut from the second layer using a water-based adhesive composition, forming zones comprising the multi-layer adhesive-bonded nonwoven of the current invention. The second layer can be the same material as or different from the first layer. Alternately, the first layer can be cut into the various pattern pieces and the second layer used as the reinforcing layer(s) on the garment. Elongated pieces comprising the first or second layer can be bonded to the gown using a water-based adhesive composition to form garment ties such that the surfaces that are bonded together form a bonded zone comprising the multi-layer adhesive-bonded nonwoven material of the current invention.

In another embodiment, a combination of the above methods can be used to make a medical garment. For example fabric that will form the sleeves of the garment can be cut entirely from a pre-fabricated multi-layer adhesive-bonded nonwoven sheet of the present invention and the rest of the body of the garment can comprise another sheet material or a zoned material wherein portions of the rest of the body of the garment comprise zones formed by adhesive-bonding of two layers according to the present invention.

## TEST METHODS

In the description above and in the examples that follow, the following test methods were employed to determine various reported characteristics and properties. ASTM refers to the American Society for Testing and Materials, and INDA refers to the Association of the Nonwovens Fabric Industry.

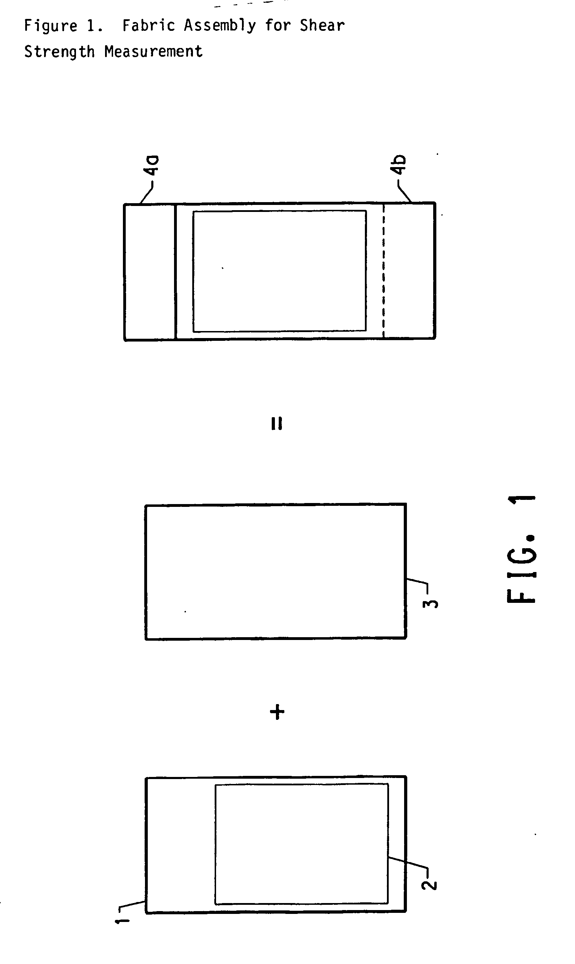

Adhesive Shear Strength was used as a measure of the hold/set strength of the adhesive-bonded multi-layer sheets described in the Examples. The adhesive shear strength was measured as a function of time using the following test method. Two pieces of fabric were glued together and tested at predetermined time intervals to establish the green strength and strength build-up over time. In shear testing, two 4 inch wide x 6 inch long (10.2 cm x 15.2 cm) pieces of fabric were glued together as shown in Figure 1. Each piece of fabric was weighed prior to application of the adhesive to confirm that the amount of adhesive applied to each sample remained approximately constant. A perimeter of adhesive 2 was placed on fabric piece 1 using a squeeze bottle, the piece was weighed and the second fabric piece 3 was placed on top of a portion of the first fabric so as to overlap with the adhesive layer as shown in Figure 1. The perimeter of adhesive measured approximately 4 inch x 4 inch (10.2 x 10.2 cm) to provide a perimeter of adhesive of approximately 16 inches (40.6 cm). A 2 inch (5.1 cm) overhang (4a, 4b) was left at the end of each piece of fabric in order for the Instron clamps to be attached during shearing of the samples. The width of the bead of adhesive making up the perimeter depends on the size of the squeeze bottle used. Two different bottle sizes with different sized tips were used in the Examples (198060 and 265100, both available from Sally Beauty Supply). The two different tip sizes allowed for two different amounts of adhesive to be placed on the fabric. The small bottle produced a perimeter of adhesive that weighed approximately 0.4 g (0.01 g/cm (Amount 1)) and the large bottle produced perimeter of adhesive weighing approximately 0.8g (0.02 g/cm (Amount 2)). As stated above this was tracked to monitor consistency in application. The samples were adhered together by applying pressure by running a hand over the portion of the fabric covering the perimeter layer of adhesive, similar to what is commonly done in the art in the manufacture of medical gowns from nonwoven materials.

Shear testing was performed using an Instron apparatus equipped with 3 inch (7.6 cm) clamps with a clamp spacing of 5 inches (12.7 cm). The Instron speed was 5 inches/minute (12.7 cm/min).

In order to compare various adhesives on different materials, the ratio between shear strength measured at a time "t" ($S_t$) and the ultimate shear strength measured when the adhesive has been allowed to dry completely ($S_{ultimate}$, measured after 24 hours of drying at room temperature) is reported in the Examples as %Ultimate Strength as shown in Equation (1):

$$\text{\% Ultimate Strength} = S_t/S_{ultimate} \times 100 \qquad (1)$$

Additional samples were also tested after 60 hours of drying at room temperature which confirmed that 24 hours of drying was sufficient to reach the Ultimate Strength. The %Ultimate Strength is a measure of the degree of drying of a sample. For example, a sample having a %Ultimate Strength of 100% would be completely dry, whereas a sample with a %Ultimate Strength of 50% would be only half dry. Shear strength ($S_t$) was measured on multi-layer samples that were allowed to dry for 3, 6, 8,12, or 20 minutes. Two sets of samples were prepared for each drying time and the results averaged.

Average Fiber Diameter was measured by scanning electron microscopy. Seventy-five (75) fibers are measured and the results are averaged. For fibers having a non-round cross-section, the "effective diameter" is equal to the diameter of a hypothetical round fiber having the same cross sectional area. It is understood that when the term average fiber diameter is used for fibers having a non-round cross-section, that the average fiber diameter is the average effective diameter.

Surface Tension values for polymers at 20°C are reported in Principles of Polymer Science, Ferdinand Rodriguez, 3rd Edition, Hemisphere Publishing Corporation (NY), 1989, pp. 367-370. Alternately, surface tension can be measured at 20°C according to ASTM D724-99 Standard Test Method for Surface Wettability of Paper (Angle-of-Contact Method). The polymer substrate on which measurements are performed can be in the form of a film. Alternately, a nonwoven sheet can be heated under pressure to provide a substrate having a smooth film-like surface for surface tension measurements. The contact angle is converted to surface tension, reported as dynes/cm.

Alcohol Repellency Rating is a measure of the resistance of fabrics to wetting and penetration by alcohol and alcohol/water solutions, expressed as the highest percentage of isopropyl alcohol solution that the fabric is capable of resisting (expressed on a 10 point scale -10 being pure isopropyl alcohol) and was conducted according to INDA IST 80.6-92.

Hydrostatic Head is a measure of the resistance of the sheet to penetration by liquid water under a static pressure. The test was conducted according to AATCC-127, which is hereby incorporated by reference, and is reported in centimeters.

## EXAMPLES

### Example 1.

This example demonstrates the formation of a multi-layer adhesive-bonded nonwoven sheet wherein two identical bicomponent SMS layers are adhered together using a water-based adhesive.

A SMS fabric having a basis weight of about 61 g/m² made of a meltblown layer sandwiched between two spunbond layers was used as the multi-layer nonwoven sheet. The spunbond layer comprised sheath-core spunbond fibers having an average fiber diameter of 13.71 microns (standard deviation 0.88 microns). The sheath component was LLDPE (obtained from Equistar Chemical Co, Cincinnati, OH, melting point 125°C) which surrounded a PET core component (Crystar® 4449, avaitable from E.I. du Pont de Nemours and Company, Wilmington, DE). The meltblown layer comprised bicomponent fibers having a side-by-side cross-section made from LLDPE (obtained from Equistar Chemical Co, Cincinnati, OH, melting point 125°C) and PET (Crystar® 4449, available from E. I. du Pont de Nemours and Company, Wilmington, DE) polymeric components. The ratio of the polyester component to the polyethylene component in the spunbond fibers was 50:50 by weight and the ratio of the polyester component to the polyethylene component in the meltblown fibers was 65:35 by weight. The SMS composite fabric was thermally point bonded and treated with a fluorochemical finish (aqueous emulsion) containing Zonyl® 7040 fluorinated acrylic fluoropolymer using a dip-squeeze process. The wet pick-up of finish was 1 g finish to 1 g SMS fabric, corresponding to 0.5 weight percent of the fluoropolymer solids on the SMS fabric. The fluoropolymer treated SMS fabric had an alcohol repellency of about 7.5.

The adhesive used was a water-based adhesive having a solids content of approximately 70 weight percent of a non-cross-linkable poly(vinyl acetate) copolymer, product code A-3474-A available from Ellsworth Company (Appleton, WI). The adhesive was applied to one layer of SMS material using Amount 1 of the adhesive in some samples and Amount 2 of the adhesive in other samples. A second layer of the same SMS material was bonded to the first layer as described above.

## Comparative Example A.

A SMS nonwoven fabric comprising single component PP meltblown and spunbond layers was used to prepare the multi-layer adhesive-bonded fabrics following the procedure described above in Example 1 and using same water-based adhesive composition. The point-bonded polypropylene SMS fabric had a basis weight of about 54 g/m$^2$ and was obtained by cutting samples from a commercially available medical gown. The fabric had an alcohol repellency of about 7.5, indicating that it had been treated with a fluorochemical.

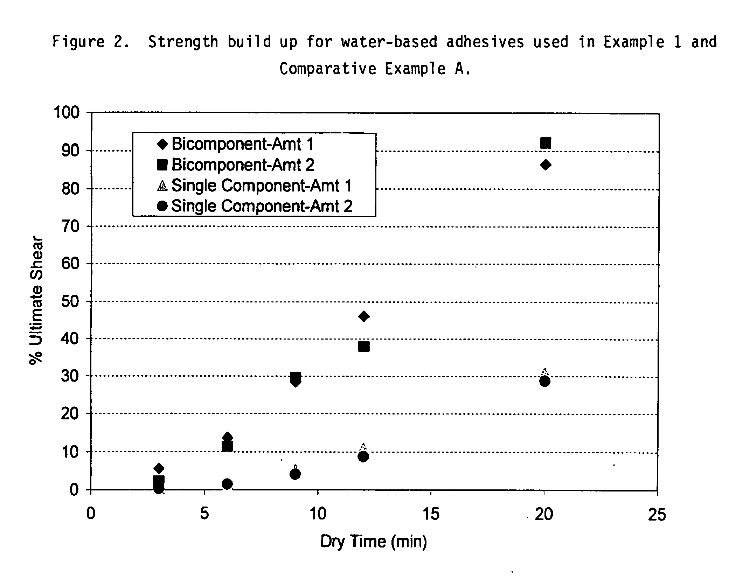

Figure 2 compares the behavior of the single component PP fabric of Comparative Example A to the bicomponent SMS fabric used in Example 1 during drying trials. The results demonstrate that the 2-layer adhesive bonded bicomponent SMS nonwoven fabric of the current invention approaches approximately 90% Ultimate Strength after approximately 20 minutes, whereas the 2-layer SMS adhesive bonded single component PP fabric of Comparative Example A had achieved only about 30% of the Ultimate Shear strength after the same drying time. While both materials eventually achieve a shear bond strength that is high enough to allow handling the wet adhesive-bonded layers without the layers shifting with respect to each other, the multi-layer adhesive-bonded nonwoven sheet of the current invention achieves this shear bond strength faster than the polypropylene SMS-based material of Comparative Example A when dried under ambient conditions, providing reduced fabrication time.

## Example 2.

The same bicomponent SMS material as used in Example 1 was evaluated with a water-based adhesive, product code L8263N, having a solids content of approximately 65 weight percent of a poly(vinyl acetate) copolymer, available from Bostik Findley Company (Wauwatosa, WI) using the method described in Example 1.

## Comparative Example B.

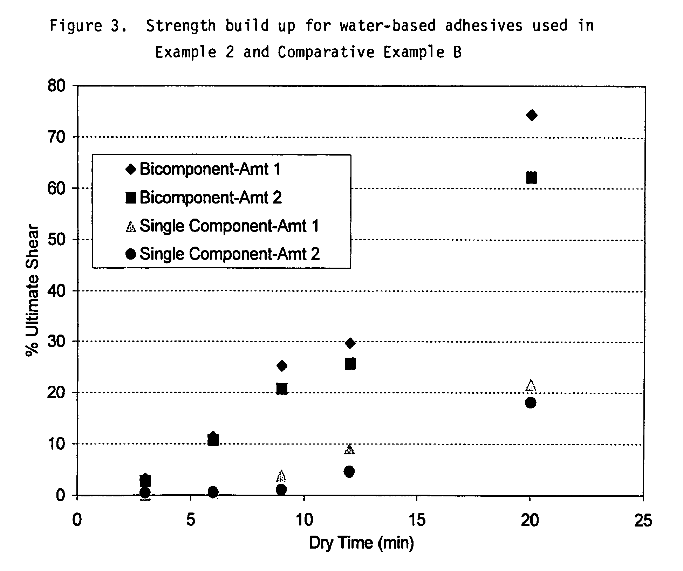

The same polypropylene SMS material used in Comparative Example A was evaluated using the same water-based adhesive used in Example 2. The % Ultimate Strength as a function of time is shown in Figure 3, comparing it to the results for Example 2. For 0.01 g/cm of adhesive (Amount 1) the 2-layer fabric of Example 2 achieved approximately 75% Ultimate Strength after 20 minutes, and for 0.02 g/cm of adhesive (Amount 2) it achieved approximately 62% Ultimate Strength compared to approximately 20% Ultimate Strength for the PP 2-layer SMS adhesive-bonded sheet of Comparative Example B.

## Example 3.

The same bicomponent SMS material as used in Example 1 was evaluated with a water-based poly(vinyl acetate) copolymer adhesive composition having a solids content of approximately 60 weight percent ( manufactured by National Starch Company (Bridgewater, NJ)) using the method described in Example 1.

## Comparative Example C.

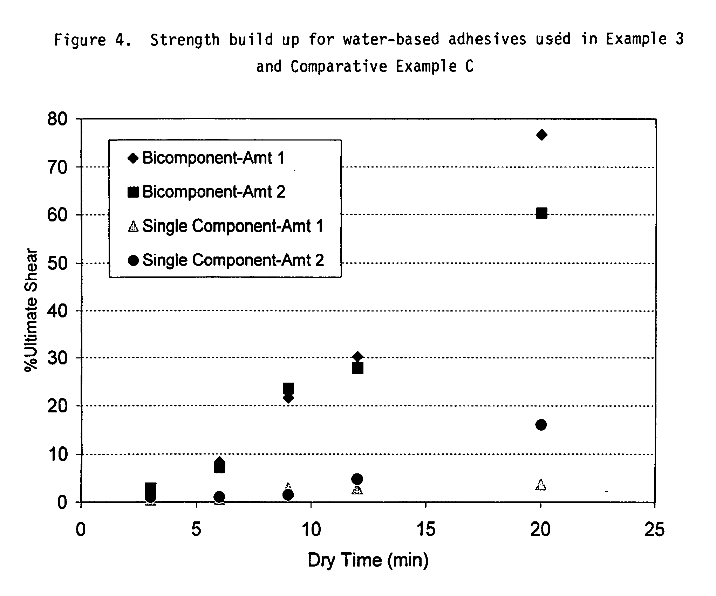

The same polypropylene SMS material used in Comparative Example A was evaluated using the same water-based adhesive used in Example 3. The % Ultimate Strength as a function of time is shown in Figure 4, comparing it to the results of Example 3. For 0.01 g/cm of adhesive (Amount 1) the 2-layer fabric of Example 3 achieved approximately 78% Ultimate Strength after 20 minutes, and for 0.02 g/cm of adhesive (Amount 2) it achieved approximately 60% Ultimate Strength compared to approximately 4% Ultimate Strength for the PP 2-layer SMS adhesive-bonded sheet of Comparative Example C for 0.01 g/cm of adhesive and approximately 17% Ultimate Strength for 0.02 g/cm of adhesive.

**Example 4.**

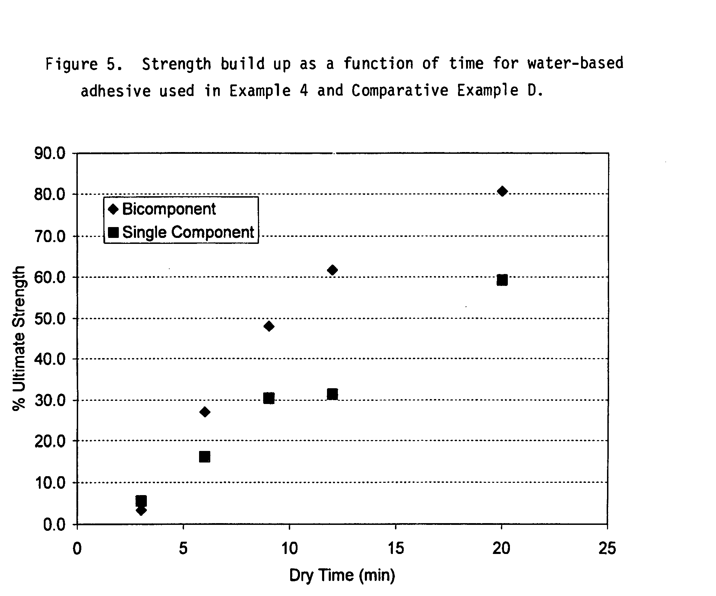

The bicomponent SMS fabric used in Example 1 was adhered to the PET side of a woodpulp- polyester spunlaced fabric (Sontara® F903 spunlaced nonwoven fabric, available from E.I. du Pont de Nemours and Company, Wilmington, DE). The spunlaced fabric was treated with a fluorochemical finish (aqueous emulsion) containing Zonyl® 8315 fluorinated acrylic fluoropolymer using a dip-squeeze process. The wet pick-up of finish was 1.25 g finish to 1 g spunlaced fabric, corresponding to 0.75 weight percent of the fluoropolymer solids on the spunlaced fabric. The finished spunlaced fabric had an alcohol repellency of about 7.5. The water-based adhesive used in Example 1 was applied to the SMS layer using a roller-tip on the end of a squeeze bottle (similar to current application method in industry). The roller tip was approximately 1 inch (2.54 cm) wide. The amount of adhesive placed on the material was 1 inch wide by 1 inch in length (2.54 cm x 2.54 cm). The woodpulp-polyester spunlaced material was approximately 1 inch wide and 14 inches long. The adhesive was placed on the SMS material and the spunlaced fabric was manually applied to the adhesive area. The adhesive was tested similar to the method used in Examples 1,2 and 3 above with the exception that the spunlaced material was narrower and less adhesive used in this trial. The adhesive was allowed to dry for 3,6,9,12 or 20 minutes and tested for strength build-up. Samples were also allowed to sit for 24 and 60 hours to determine the ultimate strength. Figure 5 shows the strength build-up (expressed as % Ultimate Strength) as a function of time.

**Comparative Example D.**

The single component polypropylene SMS material used in Comparative Example A was adhered to the woodpulp-polyester spunlaced fabric used in Example 4 following the same method as Example 4. The strength build-up as a function of time compared to Example 4 is shown in Figure 5. The results show that the 2-layer adhesive-bonded nonwoven materials formed using the bicomponent SMS fabrics reached an Ultimate Strength of approximately 80% after 20 minutes, whereas the 2-layer materials formed using the single component polypropylene SMS fabrics of Comparative Example D achieved an Ultimate Strength of only about 60% in the same time period.

**Comparative Example E.**

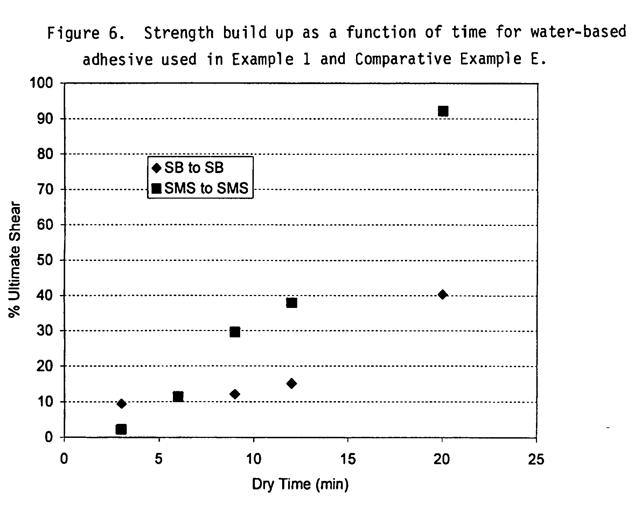

This example demonstrates adhering a single spunbond fabric layer to another single spunbond fabric layer with Amount 1 of the water-based adhesive used in Example 1. The spunbond layers were the same as those used to make the SMS fabric in Example 1. Each spunbond layer had a topically applied fluorochemical finish and had a basis weight of 34 g/m$^2$. The %Ultimate Strength as a function of time is shown in Figure 6. After 20 minutes, 2 layers of SMS in Example 1 adhered to each other achieve approximately 80% of the ultimate strength, while the 2 layers of spunbond fabrics used in Comparative Example E achieved only 40% of the ultimate strength. In addition, the adhesive penetrated through the spunbond layers to the outer surfaces thereof in Comparative Example E, but did not penetrate the SMS layers used in Example 1.

**Claims**

1. A multi-layer nonwoven sheet comprising:

   (a) a first layer comprising a first spunbond-meltblown-spunbond nonwoven fabric having an inner surface and an outer surface, wherein the meltblown layer-comprises meltblown fibers, the surface of the meltblown fibers comprising a first polymeric component having a surface tension of at least 25 milliNewtons/m (dynes/cm);
   (b) a second layer having an inner surface and an outer surface, selected.from the group consisting of nonwoven fabrics, knitted fabrics, woven fabrics, and films; and
   (c) a polymeric adhesive which adheres at least a portion of the inner surfaces of the first layer and the second layer together, wherein the polymeric adhesive is derived from a water-based adhesive composition.

2. The multi-layer nonwoven sheet of claim 1 wherein the first polymeric component comprises polyethylene.

3. The multi-layer nonwoven sheet of claim 1 wherein the first polymeric component has a surface tension of at least 40 milliNewtons/m. (dynes/cm).

4. The multi-layer nonwoven sheet of claim 3 wherein the first polymeric component comprises a polyester.

5. The multi-layer nonwoven sheet of claim 4 wherein the meltblown fibers comprise bicomponent fibers.

**6.** The multi-layer nonwoven sheet of claim 5 wherein the meltblown fibers further comprise a second polymeric component comprising polyethylene, and the polyester and polyethylene components are arranged in a side-by-side configuration.

**7.** The multi-layer nonwoven sheet of any of claims 4 to 6 wherein the polyester comprises poly(ethylene terephthalate).

**8.** The multi-layer nonwoven sheet of either of claims 1 or 3 wherein the the inner surface of the first layer comprises continuous spunbond fibers, the surface of the spunbond fibers comprising a polymer selected from the group consisting of polyolefin, polyesters, polyamides, polystyrene, and blends and copolymers thereof.

**9.** The multi-layer nonwoven sheet of claim 8 wherein the polymer comprising the surface of the spunbond fibers is selected from the group consisting of polyethylenes, polyesters, and blends and co-polymers thereof.

**10.** The multi-layer nonwoven sheet of either of claims 1 or 3 wherein the second layer is a nonwoven fabric.

**11.** The multi-layer nonwoven sheet of claim 10 wherein the second layer comprises a second spunbond-meltblown-spunbond nonwoven fabric.

**12.** The multi-layer nonwoven sheet of claim 11 wherein the second spunbond-meltblown-spunbond nonwoven fabric is the same as the first spunbond-meltblown-spunbond nonwoven fabric.

**13.** The multi-layer nonwoven sheet of claim 10 wherein the second layer comprises a spunlaced fabric.

**14.** The multi-layer nonwoven sheet of claim 1. wherein the adhesive layer comprises a discontinuous pattern of the polymeric adhesive.

**15.** The multi-layer nonwoven sheet of claim 1 wherein the polymeric adhesive is applied to the perimeter of at least one of the layers.

**16.** A medical garment comprising a base sheet material and at least one multi-layer zone, the multi-layer zone comprising a multi-layer nonwoven sheet of claim 1 adhered to the base sheet by a polymeric adhesive derived from a water-based adhesive composition.

**17.** The medical garment of claim 16 wherein the first polymeric component comprises polyethylene.

**18.** The medical garment of claim 16 wherein the first polymeric component has a surface tension of at least 40 milliNewtons/m (dynes/cm).

**19.** The medical garment of claim 18 wherein the first polymeric component is selected from the group consisting of poly(ethylene terephthalate) and copolymers of poly(ethylene terephthalate).

**20.** The medical garment of claim 16 wherein the surface of the meltblown fibers further comprises a second polymeric component.

**21.** The medical garment of claim 20 wherein the first polymeric component comprises polyethylene and the second polymeric component comprises a polyester.

**22.** The medical garment of claim 21 wherein the polyester is poly(ethylene terephthalate) and the first and second polymeric components are arranged in a side-by-side configuration.

**23.** The medical garment of claim 22 wherein the base sheet comprises a second spunbond-meltblown-spunbond nonwoven fabric.

**24.** The medical garment of claim 23 wherein the first and second spunbond-meltblown-spunbond nonwoven fabrics are each treated with a fluorochemical prior to being adhered together by the polymeric adhesive composition.

**25.** The medical garment of claim 24 wherein the first and second spunbond-meltblown-spunbond nonwoven fabrics are the same.

26. A method for forming a multi-layer adhesive-bonded nonwoven sheet comprising the steps of:

(a) providing a first layer comprising a spunbond-meltblown-spunbond nonwoven fabric having an inner surface and an outer surface, wherein the meltblown layer comprises meltblown fibers, the surface of the meltblown fibers comprising a first polymeric component having a surface tension of at least 25 milliNewtons/m (dynes/cm);
(b) providing a second layer having an inner surface and an outer surface, selected from the group consisting of nonwoven fabrics, knitted fabrics, woven fabrics, and films;
(c) applying a water-based adhesive composition to at least a portion of at least one of the inner surface of the first layer or the inner surface of the second layer; and
(d) contacting the inner surface side of the first layer and the inner surface side of the second layer to adhere the surfaces together.

27. The method of claim 26 wherein the first polymeric component has a surface tension of at least 40 milliNewtons/m (dynes/cm).

28. The method of claim 26 wherein the first polymeric component comprises polyethylene and the meltblown fibers further comprise a second polymeric component comprising poly(ethylene terephthalate) arranged in a side-by-side configuration with the first polymeric component.

29. The method of claim 26 further comprising the step of drying the multi-layer adhesive-bonded nonwoven sheet at a temperature between 15°C and 30°C.

**Patentansprüche**

1. Mehrschichtiger Faservliesstoff, der aufweist:

(a) eine erste Schicht, die einen ersten Spunbond-Meltblown-Spunbond-Faservliesstoff (SMS-Faservlies) mit einer Innenfläche und einer Außenfläche aufweist, wobei die Meltblown-Schicht schmelzgeblasene bzw. Meltblown-Fasern aufweist, wobei die Oberfläche der Meltblown-Fasern eine erste Polymerkomponente mit einer Oberflächenspannung von mindestens 25 Millinewton/m (dyn/cm) aufweist;
(b) eine zweite Schicht mit einer Innenfläche und einer Außenfläche, die aus der Gruppe ausgewählt ist, die aus Faservliesen, Gewirken, Geweben und Folien besteht; und
(c) einen Klebstoff auf Polymerbasis, der zumindest einen Teil der Innenflächen der ersten Schicht und der zweiten Schicht miteinander verklebt, wobei der Polymerklebstoff von einer Klebstoffzusammensetzung auf Wasserbasis abgeleitet ist.

2. Mehrschichtiger Faservliesstoff nach Anspruch 1, wobei die erste Polymerkomponente Polyethylen aufweist.

3. Mehrschichtiger Faservliesstoff nach Anspruch 1, wobei die erste Polymerkomponente eine Oberflächenspannung von mindestens 40 Millinewton/m (dyn/cm) aufweist.

4. Mehrschichtiger Faservliesstoff nach Anspruch 3, wobei die erste Polymerkomponente einen Polyester aufweist.

5. Mehrschichtiger Faservliesstoff nach Anspruch 4, wobei die schmelzgeblasenen bzw. Meltblown-Fasern Bikomponentenfasern aufweisen.

6. Mehrschichtiger Faservliesstoff nach Anspruch 5, wobei die Meltblown-Fasern ferner eine zweite Polymerkomponente mit Polyethylen aufweisen und die Polyester- und Polyethylen-Komponenten nebeneinander angeordnet sind.

7. Mehrschichtiger Faservliesstoff nach einem der Ansprüche 4 bis 6, wobei der Polyester Poly(ethylenterephthalat) aufweist.

8. Mehrschichtiger Faservliesstoff nach einem der Ansprüche 1 oder 3, wobei die Innenfläche der ersten Schicht Spunbond-Endlosfasern aufweist, wobei die Oberfläche der Spunbond-Fasern ein Polymer aufweist, das aus der Gruppe ausgewählt ist, die aus Polyolefinen, Polyestern, Polyamiden, Polystyrol und Gemischen und Copolymeren davon besteht.

9. Mehrschichtiger Faservliesstoff nach Anspruch 8, wobei das Polymer, das die Oberfläche der Spunbond-Fasern bildet, aus der Gruppe ausgewählt ist, die aus Polyethylenen, Polyestern und Gemischen und Copolymeren davon besteht.

10. Mehrschichtiger Faservliesstoff nach einem der Ansprüche 1 oder 3, wobei die zweite Schicht ein Faservlies ist.

11. Mehrschichtiger Faservliesstoff nach Anspruch 10, wobei die zweite Schicht einen zweiten Spunbond-Meltblown-Spunbond-Faservliesstoff aufweist.

12. Mehrschichtiger Faservliesstoff nach Anspruch 11, wobei der zweite Spunbond-Meltblown-Spunbond-Faservliesstoff der gleiche wie der erste Spunbond-Meltblown-Spunbond-Faservliesstoff ist.

13. Mehrschichtiger Faservliesstoff nach Anspruch 10, wobei die zweite Schicht ein wasserstrahlverfestigtes bzw. Spunlaced-Faservlies aufweist.

14. Mehrschichtiger Faservliesstoff nach Anspruch 1, wobei die Klebstoffschicht eine diskontinuierliche Struktur des Polymerklebstoffs aufweist.

15. Mehrschichtiger Faservliesstoff nach Anspruch 1, wobei der Polymerklebstoff auf den Umfang von mindestens einer der Schichten aufgebracht wird.

16. Medizinisches Kleidungsstück, das ein Trägerschichtmaterial und mindestens eine mehrschichtige Zone aufweist, wobei die mehrschichtige Zone einen mehrschichtigen Faservliesstoff nach Anspruch 1 aufweist, der durch einen von einer Klebstoffzusammensetzung auf Wasserbasis abgeleiteten Polymerklebstoff mit der Trägerschicht verklebt ist.

17. Medizinisches Kleidungsstück nach Anspruch 16, wobei die erste Polymerkomponente Polyethylen aufweist.

18. Medizinisches Kleidungsstück nach Anspruch 16, wobei die erste Polymerkomponente eine Oberflächenspannung von mindestens 40 Millinewton/m (dyn/cm) aufweist.

19. Medizinisches Kleidungsstück nach Anspruch 18, wobei die erste Polymerkomponente aus der Gruppe ausgewählt ist, die aus Poly(ethylenterephthalat) und Copolymeren von Poly(ethylenterephthalat) besteht.

20. Medizinisches Kleidungsstück nach Anspruch 16, wobei die Oberfläche der Meltblown-Fasern ferner eine zweite Polymerkomponente aufweist.

21. Medizinisches Kleidungsstück nach Anspruch 20, wobei die erste Polymerkomponente Polyethylen aufweist und die zweite Polymerkomponente einen Polyester aufweist.

22. Medizinisches Kleidungsstück nach Anspruch 21, wobei der Polyester Poly(ethylenterephthalat) ist und die ersten und zweiten Polymerkomponenten nebeneinander angeordnet sind.

23. Medizinisches Kleidungsstück nach Anspruch 22, wobei die Trägerschicht einen zweiten Spunbond-Meltblown-Spunbond-Faservliesstoff aufweist.

24. Medizinisches Kleidungsstück nach Anspruch 23, wobei die ersten und zweiten Spunbond-Meltblown-Spunbond-Faservliesstoffe vor dem Zusammenkleben durch die Polymerklebstoffzusammensetzung jeweils mit einer Fluorchemikalie behandelt werden.

25. Medizinisches Kleidungsstück nach Anspruch 24, wobei die ersten und zweiten Spunbond-Meltblown-Spunbond-Faservliesstoffe die gleichen sind.

26. Verfahren zur Herstellung eines mehrschichtigen klebstoffgebundenen Faservliesstoffs, das die folgenden Schritte aufweist:

(a) Bereitstellen einer ersten Schicht, die einen Spunbond-Meltblown-Spunbond-Faservliesstoff mit einer Innenfläche und einer Außenfläche aufweist, wobei die Meltblown-Schicht Meltblown-Fasern aufweist, wobei die Oberfläche der Meltblown-Fasern eine erste Polymerkomponente mit einer Oberflächenspannung von mindestens 25 Millinewton/m (dyn/cm) aufweist;

(b) Bereitstellen einer zweiten Schicht mit einer Innenfläche und einer Außenfläche, die aus der Gruppe ausgewählt ist, die aus Faservliesstoffen, Gewirken, Geweben und Folien besteht;

(c) Aufbringen einer Klebstoffzusammensetzung auf Wasserbasis auf mindestens einen Teil von mindestens einer der Innenflächen der ersten Schicht oder der Innenfläche der zweiten Schicht; und

(d) Inkontaktbringen der Seiteninnenfläche der ersten Schicht und der Seiteninnenfläche der zweiten Schicht, um die Flächen zusammenzukleben.

27. Verfahren nach Anspruch 26, wobei die erste Polymerkomponente eine Oberflächenspannung von mindestens 40 Millinewton/m (dyn/cm) aufweist.

28. Verfahren nach Anspruch 26, wobei die erste Polymerkomponente Polyethylen aufweist und die Meltblown-Fasern ferner eine zweite Polymerkomponente mit Poly(ethylenterephthalat) aufweisen, die in nebeneinanderliegender Konfiguration mit der ersten Polymerkomponente angeordnet ist.

29. Verfahren nach Anspruch 26, das ferner den Schritt zum Trocknen des mehrschichtigen klebstoffgebundenen Faservliesstoffs bei einer Temperatur zwischen 15°C und 30°C aufweist.

## Revendications

1. Feuille multicouche non tissée, comprenant:

(a) une première couche comprenant un premier tissu non tissé formé de couches filée liée-soufflée en fusion-filée liée ayant une surface interne et une surface externe, dans laquelle la couche soufflée en fusion comprend des fibres soufflées en fusion, la surface des fibres soufflées en fusion comprenant un premier composant polymère ayant une tension de surface d'au moins 25 milliNewtons/m (dynes/cm) ;

(b) une seconde couche ayant une surface interne et une surface externe, choisie dans le groupe constitué de tissus non tissés, de tissus tricotés, de tissus tissés et de films ; et

(c) un adhésif polymère qui colle ensemble au moins une partie des surfaces internes de la première couche et de la seconde couche, l'adhésif polymère étant tiré d'une composition adhésive à base d'eau.

2. Feuille multicouche non tissée selon la revendication 1, dans laquelle le premier composant polymère comprend le polyéthylène.

3. Feuille multicouche non tissée selon la revendication 1, dans laquelle le premier composant polymère a une tension de surface d'au moins 40 milliNewtons/m (dynes/cm).

4. Feuille multicouche non tissée selon la revendication 3, dans laquelle le premier composant polymère comprend un polyester.

5. Feuille multicouche non tissée selon la revendication 4, dans laquelle les fibres soufflées en fusion comprennent des fibres à deux composants.

6. Feuille multicouche non tissée selon la revendication 5, dans laquelle les fibres soufflées en fusion comprennent en outre un second composant polymère comprenant du polyéthylène et les composants polyester et polyéthylène sont disposés en configuration côte à côte.

7. Feuille multicouche non tissée selon l'une quelconque des revendications 4 à 6, dans laquelle le polyester comprend du poly(téréphtalate d'éthylène).

8. Feuille multicouche non tissée selon l'une ou l'autre des revendications 1 et 3, dans laquelle la surface interne de la première couche comprend des fibres continues filées liées, la surface des fibres filées liées comprenant un polymère choisi dans le groupe constitué des polyoléfines, des polyesters, des polyamides, du polystyrène, de leurs mélanges et de leurs copolymères.

9. Feuille multicouche non tissée selon la revendication 8, dans laquelle le polymère comprenant la surface des fibres filées liées est choisi dans le groupe constitué des polyéthylènes, des polyesters, de leurs mélanges et de leurs copolymères.

**10.** Feuille multicouche non tissée selon l'une ou l'autre des revendications 1 et 3, dans laquelle la seconde couche est un tissu non tissé.

**11.** Feuille multicouche non tissée selon la revendication 10, dans laquelle la seconde couche comprend un second tissu non tissé formé de couches filée liée-soufflée en fusion-filée liée.

**12.** Feuille multicouche non tissée selon la revendication 11, dans laquelle le second tissu non tissé formé de couches filée liée-soufflée en fusion-filée liée est identique au premier tissu non tissé formé de couches filée liée-soufflée en fusion-filée liée.

**13.** Feuille multicouche non tissée selon la revendication 10, dans laquelle la seconde couche comprend un tissu filé lacé.

**14.** Feuille multicouche non tissée selon la revendication 1, dans laquelle la couche adhésive comprend un profil discontinu de l'adhésif polymère.

**15.** Feuille multicouche non tissée selon la revendication 1, dans laquelle l'adhésif polymère est appliqué sur le périmètre d'au moins l'une des couches.

**16.** Vêtement médical comprenant un matériau en feuille de base et au moins une zone multicouche, la zone multicouche comprenant une feuille multicouche non tissée selon la revendication 1 collée sur la feuille de base par un adhésif polymère tiré d'une composition adhésive à base d'eau.

**17.** Vêtement médical selon la revendication 16, dans lequel le premier composant polymère comprend du polyéthylène.

**18.** Vêtement médical selon la revendication 16, dans lequel le premier composant polymère a une tension de surface d'au moins 40 milliNewtons/m (dynes/cm).

**19.** Vêtement médical selon la revendication 18, dans lequel le premier composant polymère est choisi dans le groupe constitué du poly(téréphtalate d'éthylène) et de copolymères de poly(téréphtalate d'éthylène).

**20.** Vêtement médical selon la revendication 16, dans lequel la surface des fibres soufflées en fusion comprend en outre un second composant polymère.

**21.** Vêtement médical selon la revendication 20, dans lequel le premier composant polymère comprend du polyéthylène et le second composant polymère comprend un polyester.

**22.** Vêtement médical selon la revendication 21, dans lequel le polyester est un poly(téréphtalate d'éthylène) et les premier et second composants polymères sont disposés en configuration côte à côte.

**23.** Vêtement médical selon la revendication 22, dans lequel la feuille de base comprend un second tissu non tissé formé de couches filée liée-soufflée en fusion-filée liée.

**24.** Vêtement médical selon la revendication 23, dans lequel les premier et second tissus non tissés formés de couches filée liée-soufflée en fusion-filée liée sont chacun traités avec un produit fluorochimique avant d'être collés ensemble par la composition adhésive polymère.

**25.** Vêtement médical selon la revendication 24, dans lequel les premier et second tissus non tissés formés de couches filée liée-soufflée en fusion-filée liée sont identiques.

**26.** Procédé pour former une feuille non tissée multicouche liée par un adhésif, comprenant les étapes suivantes:

(a) on met en oeuvre une première couche comprenant un premier tissu non tissé formé de couches filée liée-soufflée en fusion-filée liée ayant une surface interne et une surface externe, dans laquelle la couche soufflée en fusion comprend des fibres soufflées en fusion, la surface des fibres soufflées en fusion comprenant un premier composant polymère ayant une tension de surface d'au moins 25 milliNewtons/m (dynes/cm) ;

(b) on met en oeuvre une seconde couche ayant une surface interne et une surface externe, choisie dans le groupe constitué de tissus non tissés, de tissus tricotés, de tissus tissés et de films ;

(c) on applique une composition adhésive à base d'eau sur au moins une partie d'au moins une surface de la surface interne de la première couche ou de la surface interne de la seconde couche ; et

(d) on met en contact le côté surface interne de la première couche et le côté surface interne de la seconde couche pour coller les surfaces ensemble.

27. Procédé selon la revendication 26, dans lequel le premier composant polymère a une tension de surface d'au moins 40 milliNewtons/m (dynes/cm).

28. Procédé selon la revendication 26, dans lequel le premier composant polymère comprend du polyéthylène et les fibres soufflées en fusion comprennent en outre un second composant polymère comprenant du poly(téréphtalate d'éthylène) aménagé en configuration côte à côte avec le premier composant polymère

29. Procédé selon la revendication 26, comprenant en outre l'étape de séchage d'une feuille non tissée multicouche liée par un adhésif à une température de 15°C à 30°C.

Figure 1. Fabric Assembly for Shear
Strength Measurement

FIG. 1

EP 1 606 104 B1

Figure 2.   Strength build up for water-based adhesives used in Example 1 and
Comparative Example A.

Figure 3. Strength build up for water-based adhesives used in Example 2 and Comparative Example B

Legend:
- ◆ Bicomponent-Amt 1
- ■ Bicomponent-Amt 2
- △ Single Component-Amt 1
- ● Single Component-Amt 2

% Ultimate Shear vs. Dry Time (min)

Figure 4. Strength build up for water-based adhesives uséd in Example 3
and Comparative Example C

Figure 5.  Strength build up as a function of time for water-based
adhesive used in Example 4 and Comparative Example D.

EP 1 606 104 B1

Figure 6. Strength build up as a function of time for water-based
adhesive used in Example 1 and Comparative Example E.

EP 1 606 104 B1

Figure 7. Strength build up as a function of time for water-based adhesive used in Example 1 and Example 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4588457 A, Crenshaw

**Non-patent literature cited in the description**

• **FERDINAND RODRIGUEZ.** Principles of Polymer Science. Hemisphere Publishing Corporation, 1989, 367-370